# EUROPEAN PATENT SPECIFICATION

(11) **EP 0 425 062 B1**
(45) Date of publication and mention of the grant of the patent: **13.07.1994**
(21) Application number: 90250273.1
(22) Date of filing: 24.10.1990
(51) Int. Cl.: B23B 31/32, B23B 31/30

(54) **Air operated chuck**
Luftdruckgesteuertes Futter
Mandrin pneumatique

(30) Priority: 26.10.1989 JP 281168/89
(43) Date of publication of application: 02.05.1991
(73) Proprietor: FUJII SEIMITSU KOGYO CO., LTD., Nara-shi, Nara-ken (JP)
(72) Inventor: Sato, Takao c/o Fujii Seimitsu Kogyo Co., Ltd., 2-Chome, Nara-shi, Nara-Ken, (JP)
(74) Representative: Patentanwälte Wenzel & Kalkoff

(56) References cited:
- DE-C- 325 606
- US-A- 2 582 680
- US-A- 3 467 401
- PATENT ABSTRACTS OF JAPAN, vol. 7, no. 283 (M-263)(1428), 16 th December 1983 ; & JP-A-58 160 005 (OKUMA TEKKOSHO K.K.) 22-09-1983

## Description

The present invention relates to a workpiece chuck for a machine tool according to the preamble of claim 1 (see JP-A-58 160 005).

The use of air pressure workpiece chucks with machine tools is well known. Such devices employ rotating air lines to carry a constant source of operating air to piston actuated chuck jaw operators. These rotating air lines are difficult to balance and, as a result, transmit vibration to the operating machine tool. In addition, these rotating air lines are subject to friction, causing them to fail during operation.

A piston actuated chuck jaw operator is disclosed in document JP-A-58 160 005. The jaws are mounted on a diaphragm and a pressurised air activated piston acts on bars which push against the diaphragm and bow it, causing the jaws to move.

Interchangeable top chuck jaws are also commonly used with machine tool chucks to adapt them to variety of workpieces. Because these interchangeable jaws are individually mounted, they require special operator skill to assure that they are properly mounted and balanced.

### OBJECTS AND SUMMARY OF THE INVENTION

Accordingly, it is an object of the invention to provide an air chuck that overcomes the drawbacks of the prior art.

It is a further object of the invention to provide an air chuck that displays improved reliability and precision operation and that can be operated with a minimum of special skill.

It is a still further object of the invention to provide an air chuck having a non-rotating air tube axially disposed with respect to the chuck.

It is a still further object of the invention to provide an air chuck having means for maintaining internal air pressure to a chuck-actuation device without requiring a continuous external supply of air pressure.

These objects are attained with a chuck according to claim 1.

The dependent claims define further embodiments of the invention.

The above and other objects, features and advantages of the invention will become apparent from the following description of the preferred embodiment read in conjunction with the accompanying drawings, in which like reference numerals designate the same elements.

### BRIEF DESCRIPTION OF THE DRAWINGS

Fig. 1 is a side view of a chuck, partly in cross section, according to the prior art.

Fig. 2 is a front view of the prior art with a partial cutaway showing the relationship of its parts.

Fig. 3 is a cross section of work gripping device according to an embodiment of the invention.

Fig. 4 is a front view of a chuck body of the invention showing a replaceable hook assembly installed and cutaway at the right to show the chuck body.

### DETAILED DESCRIPTION OF THE PREFERRED EMBODIMENT

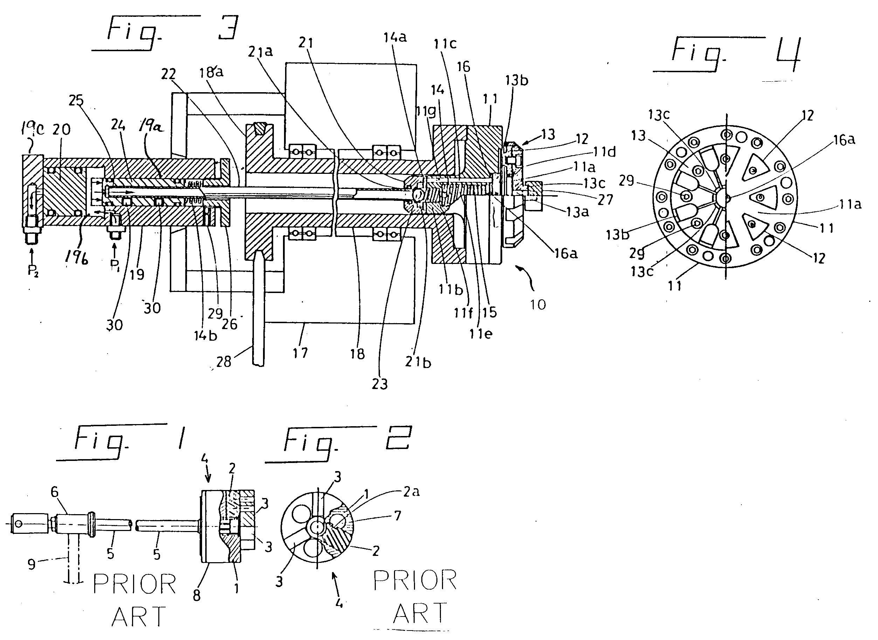

Referring to Figs. 1 and 2, there is shown an air operated chuck 4 of the prior art. Chuck 4, which is installed in an adapter 8, includes a chuck body 1 on which radially arrayed master jaws 2 are slidably mounted so that they may be slid toward and away from an axial center. A top jaw 3 is removably mounted on each master jaw 2. Removable mounting allows top jaws 3 to be interchanged as required to adapt chuck 4 to a variety of work piece shapes.

An air tube 5 is connected between a rotary journal 6 and chuck 4 to operate a conventional piston (not shown). The piston presses against an actuator 7 that engages master jaws 2 through grooves 2a. An air hose 9 is connected at the inlet of rotary journal 6 to provide the high pressure air that operates chuck 4.

When high pressure air is applied through air hose 9, the air is transmitted through journal 6 to air tube 5. The pressure of the air in air tube 5 moves the piston forward, causing actuator 7 to slide master jaws 2 inward toward the axis of chuck body 1 together with their attached top jaws 3 to grip the work piece to be machined.

In this embodiment of the prior art, while the replaceable top jaws 3 give chuck 4 the ability to accommodate a variety of workpiece sizes and shapes, they are attached individually to each master jaw 2. This is a significant drawback in that the replacement of top jaws 3 requires considerable operator skill to properly balance and center a workpiece for precision machining.

A second major drawback of the prior art, which uses a rotating air tube 5, is that air tube 5 is inherently difficult to balance and can cause chuck 4 to vibrate in adapter 8 further degrading the operation of the machine tool. A rotating air tube 5 is also subject to friction heating, causing air tube 5 to burn into or wear down journal 6 without frequent lubrication.

Referring now to Fig. 3, there is shown, generally at 10, a chuck according to the present invention. A chuck body 11 is a shallow cylinder with a narrow cylindrical protrusion 11b yielding a "T"-shaped cross section. A thin membrane 11a covers a recess 11d at a center of chuck body 11 on the side opposite protrusion 11b. A plurality of gripping members 12 are attached in a radial direction on the surface of thin membrane 11a.

Referring to Fig. 4, a jaw attachment 13 is a removable disk that has a circular opening 13a at its center and a ring 13b at its outer perimeter. The body of jaw attachment 13 is divided into a plurality of radially oriented jaws 13c that match gripping members 12 in quantity and orientation. The inward pointing edges of jaws 13c are bent vertically to form contact areas for securing a workpiece 27. Jaw attachment 13 is removably secured at each jaw 13c to a gripping member 12 by a setscrew 29. Jaw attachment 13 can be formed for a variety of workpiece 27 shapes and sizes and is interchanged to suit workpiece 27 in process.

Referring again to Fig. 3, an air path 11c enters chuck body 11 at its end surface while an air hole 11g joins a piston bore 11e and a valve spring bore 11f of protrusion 11b. A spring 14 and a pressure maintenance piston 15 are inserted in piston bore 11e. A lid 16 holds piston 15 against spring 14 within piston bore 11e. An air hole 16a in lid 16 releases excess air pressure. Spring 14 and piston 15 ensure that a minimum pressure is maintained as required during operation. The minimum pressure is approximately equal to the force of spring 14 against piston 15.

Protrusion 11b of chuck body 11 is removably inserted into a first end of a tubular main shaft 18, which is rotatably mounted on a machine tool 17. A belt 28 of machine tool 17 is seated in an annular groove that surrounds a pulley end of main shaft 18 to rotate main shaft 18 during operation. A cylinder 19, that is mounted on machine tool 17 a short distance from, and axially aligned with, a pulley end 18a, has a narrow bore 19a extending approximately 2/3 of its length starting at an end proximal to pulley end 18a. Starting at an opposite end of cylinder 19, a wide bore 19b extends to meet narrow bore 19a. A free piston 20 is slidably inserted in cylinder 19b which is closed by an end plate 19c. An air inlet P1 enters wide bore 19b at an end adjacent to narrow bore 19a, while an air inlet P2 enters cylinder wide bore 19b through end plate 19c.

A spring 14a is inserted into valve spring bore 11f of protrusion 11b to exert pressure against a backflow valve 23 to hold backflow valve 23 against a first end of an air tube 22 that enters valve spring bore 11f through an axial hole 21a in disk shaped guide member 21. Guide member 21 forms a slidable and rotatable airtight seal around air tube 22. Air tube 22 extends back from backflow valve 23 through main shaft 18 and a positioning plug 26 into narrow bore 19a of cylinder 19. An annular recess 21b in guide member 21 allows air to flow around backflow valve 23 when air tube 22 is moved to a forward position. Setscrew 29 holds positioning plug 26 in position at an end of narrow bore 19a. The depth of to which positioning plug 26 penetrates cylinder 19 is adjustable to control the travel of a piston 24 in narrow bore 19a. A second end of air tube 22 is rigidly inserted into narrow bore 19a. Tap screws 30 secure piston 24 to air tube 22.

An air hole 25 at a terminal end of piston 24 allows air flow between wide bore 19b and air tube 22. A spring 14b is positioned between positioning plug 26 and piston 24 to apply back pressure against piston 24.

During operation, a hollow workpiece 27 may be held by chuck 10 from the inside, while a solid workpiece 27 may be held by chuck 10 by its outer surface.

When workpiece 27 is to be held from the inside, it is positioned over jaws 13c. High pressure air is applied through air inlet P1. The high pressure air pushes free piston 20 back toward end plate 19c and flows through piston 24 and air tube 22 causing backflow valve 23 to open. Spring 14b prevents piston 24 from moving forward while air flows around backflow valve 23 through recess 21b in guide member 21 and through air path 11c applying pressure to thin membrane 11a. Thin membrane 11a bows outward under the air pressure, spreading jaw attachment 13. This causes jaw attachments 13c to grip workpiece 27.

Once workpiece 27 is gripped, the air supply is shut off. Spring 14a closes backflow valve 23. Pressure maintenance piston 15, which is a safety release for excess air pressure, is held tightly against lid 16 by spring 14, thus maintaining the air pressure against thin membrane 11a while workpiece 27 is processed with only a slight pressure leak possible.

Because ring 13b assures that all jaws 13c move the same distance as they grip workpiece 27, proper centering of workpiece 27 is assured. In addition, all jaws 13c are joined by ring 13b to form single replaceable jaw attachment 13, thereby simplifying replacement and dynamic balancing of jaws 13c.

Because air tube 22 is rotatably supported by guide member 21 and does not rotate with chuck body 11, balancing of air tube 22 is not necessary and the problem of introducing vibration and imbalance through a rotating air tube is eliminated.

To release a workpiece 27 from chuck 10, high pressure air is inlet through air inlet P2, pushing free piston 20 against piston 24. As free piston 20 bears against piston 24, piston 24 causes air tube 22 to open backflow valve 23 allowing the air pressure against thin membrane 11a to escape through air path 11c and recess 21b. With the reduction of air pressure, thin membrane 11a returns to its flattened starting shape, pulling jaws 13c together, releasing workpiece 27.

When a workpiece 27 is to be held by its outer surface, high pressure air is initially applied through air inlet P1 and jaws 13c are spread as if it were to hold a workpiece 27 from the inside. A workpiece 27 is then inserted between the spread jaws 13c. When workpiece 27 is positioned between jaws 13c, air pressure is applied through air inlet P2. The air applied through air inlet P2 presses against free piston 20, which, in turn, pushes piston 24 with air tube 22 against backflow valve 23, thus causing backflow valve 23 to open. As the air pressure is discharged through the path previously described for releasing a workpiece 27 held from the inside, jaws 13c close on workpiece 27 gripping it from the outside.

To release workpiece 27 held by its outer surface, high pressure air is applied through air inlet P1 and jaws 13c are spread as described above.

Having described the preferred embodiment of the invention with reference to the accompanying drawings, it is to be understood that the invention is not limited to those precise embodiments.

## Claims

1. A chuck (10) for holding a workpiece (27) comprising a chuck body mounted for rotation about a fixed axis, said chuck body including a hollow shaft part (18) and a chuck head (11) at an end of the hollow shaft part, the chuck head carrying workpiece engageable jaws (13c) fixed to a membrane (11a) on the chuck head, said membrane being moveable between flat and bowed conditions to correspondingly move the jaws (13c) radially of the fixed axis in each of two opposite directions for, respectively, holding the workpiece and for releasing a held workpiece, and means for moving the membrane between flat and bowed conditions with air pressure, said moving means including an air pipe (22) extending through the hollow shaft part, one end of the air pipe being located at a source of air pressure (P1; P2; 19b), the other end of the air pipe being located at the chuck head, characterized in that
the air pipe (22) is mounted on support elements (21;26) so as to be nonrotating, one support element (21) air tightly sealing the air tube to the hollow shaft part, in that an air path (11c) exists in said chuck head by which pressurized air from the air pressure source can flow from an opening at the air pipe other end directly against a side of the membrane to move it into bowed condition and hold it in that condition as long as the air pressure is maintained at the membrane side, and in that means (11e; 15; 16; 23) are provided to release the air pressure at the membrane side so that the membrane can move to flat condition.

2. A chuck for holding a workpiece according to claim 1 characterized in that the air pipe (22) is slidable in said one support element, in that the one end of the air pipe is fixed in the bore (19a) of a piston (24) which is slidable in a first part of a cylinder (19) located remote from the chuck body, a second part of the cylinder having a bore (19b) larger than that of the first part (19a) with a free piston (20) being in the second part bore and slidable in opposite directions in said second part bore, in that air pressure connections (P1;P2) are provided on the cylinder second part to admit air pressure at opposite face sides of the free piston, one face of the free piston facing the bore of the piston (24) in the cylinder first part so that when air pressure is admitted at said one face of the free piston said free piston is moved in a direction away from the air pipe one end, the air pressure entering the air pipe one end and flowing to the air pipe other end to overcome a valve (23) blocking the opening at said other pipe end and enter said flow path and flow against said membrane side, and in that if air pressure is shut off, a bias means (14) will urge the valve to blocking position before the air pressure at the face of the membrane can release and allow the membrane to move to flat condition.

3. A chuck for holding a workpiece according to claim 2 characterized in that when air pressure is admitted at the free piston face opposite said one face, the free piston (20) is urged against the piston (24) in the cylinder first part moving it in the direction of the chuck head (11) and causing the said other end of the air pipe (22) fixed thereto to open said valve (23) releasing air pressure at the face of the membrane (11a) whereby the membrane moves to flat condition.

4. A chuck for holding a workpiece according to claim 1 characterized in that the workpiece engageable jaws (13a) comprise an assembly of plural jaws removably connected to the membrane.

5. A chuck for holding a workpiece according to claim 4 characterized in that the assembly of jaws includes a ring (13b) with which a correspondingly plurality of gripping members (12) are attached to the membrane, the jaws being removably fixed to the gripping members such that each jaw and its associated gripping member move as a unit in a radial direction on the membrane when the membrane moves between its flat and bowed conditions.

## Patentansprüche

1. Ein Spannfutter (10) zum Halten eines Werkstückes (27), umfassend:
einen Spannfutterkörper, der zum Drehen um eine feste Achse gelagert ist und einen hohlen Wellenabschnitt (18) und einen Spannfutterkopf (11) am einen Ende des hohlen Wellenabschnitts umfaßt, wobei der Spannfutterkopf am Werkstück angreifenden Backen (13c) trägt, die an einer Membran (11a) an dem Spannfutterkopf befestigt ist, und die Membran zwischen flachen und gebogenen Zuständen beweglich ist, um die Backen (13c) radial zur festen Achse in zwei zueinander entgegengesetzten Richtungen entsprechend zu bewegen, um das Werkstückes zu halten bzw. das gehaltenen Werkstückes freizugeben; und Mittel zum Bewegen der Membran durch Luftdruck zwischen den flachen und gebogenen Zuständen, wobei diese Mittel zum Bewegen ein sich den hohlen Wellenabschnitt hindurch erstreckendes Luftrohr (22) enthält, dessen eines Ende sich an einer Druckluft-Quelle ( P1; P2; 19b) und dessen anderes Ende sich an dem Spannfutterkopf befindet, dadurch gekennzeichnet, daß das Luftrohr (22) auf Tragelementen (21; 26) nicht-drehend angeordnet ist, wobei ein Tragelement (21) das Luftrohr luftdicht an den hohlen Wellenabschnitt anschließt, daß ein Luftdurchgang (11c) in dem Spannfutterkopf besteht, durch den Druckluft von der Druckluft-Quelle von einer Öffnung an dem anderen Ende des Luftrohrs unmittelbar gegen eine Seite der Membran strömen kann, um dieselbe in gebogenem Zustand zu bewegen und in diesem Zustand zu halten, solange der Luftdruck auf der Membranseite aufrechterhalten wird, und daß Mittel (11e; 15; 16; 23) vorgesehen sind um den Luftdruck auf der Membranseite freizugeben, so daß die Membran sich in flachen Zustand bewegen kann.

2. Ein Spannfutter zum Halten eines Werkstückes nach Anspruch 1, dadurch gekennzeichnet, daß das Luftrohr (22) in dem einen Tragelement gleitbar ist, daß das eine Ende des Luftrohrs in der Bohrung (19a) eines Kolbens (24) befestigt ist, der gleitbar in einem ersten Teil eines sich entfernt vom Spannfutterkörper befindenden Zylinders (19) ist, und dessen zweiter Teil eine Bohrung (19b) hat, die größer als die des ersten Teils (19a) ist, und in der ein freier Kolben (20) in entgegengesetzten Richtungen gleitbar ist, daß Luftdruck-Verbindungen (P1; P2) an dem zweiten Teil des Zylinders zum Einlassen von Luftdruck an gegenüberliegenden Seitenflächen des freien Kolbens vorgesehen sind, wobei eine Fläche des freien Kolbens der Bohrung des Kolbens (24) in dem ersten Teil des Zylinders gegenüberliegt, so daß beim Einlassen vom Luftdruck an der einen Fläche des freien Kolbens dieser sich in einer Richtung vom Luftrohr weg bewegt, und wobei der Luftdruck in das eine Ende des Luftrohrs eintritt und bis zum anderen Ende des Luftrohrs fließt, um ein die Öffnung an dem anderen Ende des Rohrs sperrendes Ventil (23) zu öffnen in den Luftdurchgang einzutreten, und zum Fließen gegen die Membranseite zu strömen, und daß, wenn der Luftdruck abgeschnitten wird, ein Vorbelastungsmittel (14) das Ventil in sperrende Position drückt, bevor der Luftdruck an der Membranseite entlastet werden kann um der Membran zu ermöglichen, sich in den flachen Zustand zu bewegen.

3. Ein Spannfutter zum Halten eines Werkstückes nach Anspruch 2, dadurch gekennzeichnet, daß, wenn Luftdruck an der Fläche des freien Kolbens gegenüber der einen Seite eingelassen wird, der freie Kolben (20) gegen den Kolben (24) in dem ersten Teil des Zylinders gedrückt wird und diesen in Richtung des Spannfutterkopfs (11) bewegt, wobei das damit verbundene andere Ende des Luftrohrs (22) zum Öffnen des Ventils (23) veranlasst wird, indem der Luftdruck an der Fläche der Membran (11a) entlastet wird, wodurch sich die Membran in flachen Zustand bewegt.

4. Ein Spannfutter zum Halten eines Werkstückes nach Anspruch 1, dadurch gekennzeichnet, daß die am Werkstück angreifenden Backen (13a) eine Anordnung einer Mehrzahl von Backen aufweist, die lösbar mit der Membran verbunden sind.

5. Ein Spannfutter zum Halten eines Werkstückes nach Anspruch 4, dadurch gekennzeichnet, daß die Backenanordnung einen Ring (13b) umfaßt, durch den eine entsprechende Mehrzahl greifender Elemente (12) an der Membran befestigt sind, wobei die Backen lösbar an den greifenden Elementen befestigt sind, so daß jede Backe und ihr zugeordnetes spannendes Element sich als Einheit in einer radialen Richtung auf der Membran bewegen, wenn diese sich zwischen ihren flachen und gebogenen Zuständen bewegt.

## Revendications

1. Mandrin (10) pour la retenue d'une pièce à usiner (27) comprenant un corps de mandrin monté pour tourner autour d'un axe fixe, ledit corps de mandrin comprenant une partie (18) d'arbre creux et une tête (11) de mandrin à une extrémité de la partie d'arbre creux, la tête de mandrin portant des mâchoires (13c) pouvant porter contre la pièce à usiner et qui sont fixées à une membrane (11a) prévue sur la tête du mandrin, ladite membrane étant déplaçable entre des conditions où elle est plate ou bombée de façon à déplacer en correspondance les mâchoires (13c) en direction radiale de l'axe fixe dans chacune de deux directions opposées pour, respectivement, saisir la pièce à usiner et pour relâcher une pièce à usiner qui a été saisie, et des moyens pour déplacer la membrane entre les conditions plate et bombée avec de l'air sous pression, lesdits moyens de déplacement comprenant une conduite d'air (22) s'étendant à travers la partie de l'arbre creux, l'une des extrémités de la conduite d'air étant située à l'endroit d'une source d'air sous pression (P1 ; P2 ; 19b), l'autre extrémité de la conduite d'air étant située à l'endroit de la tête de mandrin, caractérisé en ce que :
- la conduite d'air (22) est montée sur des éléments de support (21, 26) de façon à ne pas tourner, l'un des éléments de support (21) réalisant une étanchéité hermétique à l'air entre la conduite d'air et la partie de l'arbre creux, en ce que un trajet d'air (11c) est formé dans ladite tête de mandrin par lequel de l'air sous pression provenant de la source d'air sous pression peut s'écouler depuis une ouverture formée à l'autre extrémité de la conduite d'air directement contre une face de la membrane de façon à la déplacer dans sa condition de bombement et à la maintenir dans cette condition aussi longtemps que la pression d'air est maintenue sur cette face de la membrane, et en ce que des moyens (11e ; 15 ; 16 ; 23) sont prévus pour relâcher la pression d'air sur la face de la membrane de sorte que la membrane peut se déplacer vers la condition où elle est plate.

2. Mandrin pour maintenir une pièce à usiner selon la revendication 1, caractérisé en ce que la conduite d'air (22) coulisse dans ledit premier élément support, en ce que ladite première extrémité de la conduite d'air est fixée dans l'alésage (19a) d'un piston (24) qui coulisse dans une première partie d'un cylindre (19) disposé en position éloignée du corps de mandrin, une seconde partie du cylindre comportant un alésage (19b) plus grand que celui formé dans la première partie (19a) avec un piston libre (20) logé dans le second alésage et coulissant dans des directions opposées dans ledit second alésage, en ce que des connexions d'air sous pression (P1 ; P2) sont prévues sur la seconde partie du cylindre de façon à admettre de l'air sous pression sur les faces latérales opposées du piston libre, l'une des faces du piston libre faisant face à l'alésage du piston (24) dans la première partie du cylindre de sorte que lorsque de l'air sous pression est admis sur ladite face du piston libre ledit piston libre se déplace dans une direction qui l'écarte de ladite extrémité première de la conduite d'air, la pression d'air pénétrant à ladite extrémité première de la conduite d'air et s'écoulant vers ladite autre extrémité de la conduite d'air pour vaincre une soupape (23) bloquant l'ouverture de ladite autre extrémité de la conduite et pour pénétrer dans ledit trajet d'air et s'écouler contre ladite face de la membrane, et en ce que si la pression d'air est coupée, un moyen élastique (14) vient presser le clapet dans la position de blocage avant que la pression d'air sur la face de la membrane ne puisse se relâcher et permettre à la membrane de se déplacer vers sa condition dans laquelle elle est plate.

3. Mandrin pour maintenir une pièce à usiner selon la revendication 2, caractérisé en ce que lorsque la pression d'air est admise sur la face du piston libre opposé à ladite première face, le piston libre (20) est pressé contre le piston (24) dans la première partie de cylindre le déplaçant dans la direction de la tête (11) de mandrin et provoquant la commande d'ouverture dudit clapet (23) par ladite autre extrémité de la conduite d'air (22) qui y est fixée relâchant la pression d'air sur la face de la membrane (11a) permettant par suite à la membrane de se déplacer vers sa condition dans laquelle elle est plate.

4. Mandrin pour retenir une pièce à usiner selon la revendication 1, caractérisé en ce que les mâchoires (13a) qui viennent contre la pièce à usiner comprennent un ensemble de plusieurs mâchoires reliées de façon amovible à la membrane.

5. Mandrin pour le maintien d'une pièce à usiner selon la revendication 4, caractérisé en ce que l'ensemble des mâchoires comprend une bague (13b) avec laquelle une pluralité en correspondance d'organes (12) de saisie sont fixés à la membrane, les mâchoires étant fixées de façon amovible aux organes de saisie de telle façon que chaque mâchoire et son organe de saisie associé se déplacent comme un tout dans une direction radiale sur la membrane lorsque la membrane se déplace entre ces conditions d'applatissement et de bombement.
